# DEMANDE DE BREVET EUROPEEN

(11) **EP 1 536 193 A1**
(43) Date de publication de la demande: **01.06.2005**
(21) Numéro de dépôt: 04027240.3
(22) Date de dépôt: 17.11.2004
(51) Int. Cl.: F25B 41/06

(54) **Organe de détente à électronique intégrée pour boucle à fluide réfrigérant, en particulier d'un appareil de climatisation pour habitacle de véhicule**

(30) Priorité: 25.11.2003 FR 0313779
(71) Demandeur: VALEO CLIMATISATION, 78321 La Verrière (FR)
(72) Inventeur: Ben Yahia, Mohamed, 75005 Paris (FR); Liu, Jin Ming, 78700 Conflans St Honorine (FR)

(57) **Abrégé**

L'invention a pour objet un organe de détente (25) pour boucle de climatisation à fluide réfrigérant, en particulier d'un habitacle de véhicule automobile, caractérisé en ce qu'au moins un élément choisi parmi une sonde de température (30), un capteur de pression (32) et une carte électronique (34) est intégré audit organe de détente (25) pour former un ensemble unitaire autonome. L'invention se rapporte également à une boucle fermée de circulation de fluide réfrigérant, tel que du CO₂, pour un appareil de ventilation, de chauffage et/ou de climatisation de véhicule automobile comprenant au moins un compresseur, un évaporateur et un organe de détente tel que décrit précédemment.

## Description

L'invention se rapporte à un organe de détente à électronique intégrée pour boucle de climatisation à fluide réfrigérant, en particulier pour un appareil de ventilation, de chauffage et/ou de climatisation d'habitacle de véhicule automobile.

Un appareil actuel de ventilation, de chauffage et/ou de climatisation pour habitacle de véhicule automobile comprend, de manière générale, au moins un conduit principal de circulation d'air à l'intérieur duquel sont disposés, notamment, un pulseur pour propulser l'air chaud, froid ou tiède en direction de l'habitacle du véhicule, un évaporateur pour refroidir l'air, un organe de chauffage pour réchauffer l'air et, à l'extérieur du conduit principal, une boucle fermée de circulation d'un fluide réfrigérant comprenant à cet effet au moins ledit évaporateur, un compresseur, un organe de détente ou détendeur et éventuellement un condenseur ou un refroidisseur de gaz (appelée « gas cooler » ), un échangeur interne et un accumulateur.

Parmi les fluides réfrigérant utilisés, il est possible d'utiliser des CFC, tels que le HFC134a, mais il est de plus en plus courant d'utiliser du dioxyde de carbone (CO₂) référencé R744, notamment pour des considérations écologiques de limitation de l'effet de serre dans la couche d'ozone qui conduit au réchauffement de la planète. En effet, la valeur du potentiel de réchauffement de la planète par le CO₂ est extrêmement basse, environ 1/1300 par rapport au HFC-134a. Donc, même s'il y avait une fuite de CO₂ utilisé comme réfrigérant pour un tel appareil de ventilation, de chauffage et/ou de climatisation, l'effet causé par cette fuite sur l'environnement, tel que l'effet de serre, serait négligeable.

Le CO₂ a une température critique (la température au-dessus de laquelle une substance ne peut pas exister à l'état liquide, quelle que soit la pression) plus basse que celle du HFC-134a et une pression critique (pression d'équilibre d'un fluide qui a atteint sa température critique) plus élevée que celle du HFC-134a. Par conséquent, dans un système de climatisation qui adopte le réfrigérant au CO₂, la température côté haute pression dépasse le point critique. Il en résulte une pression de fonctionnement de 7 à 10 fois supérieure à celle du HFC-134a.

Le contrôle de la haute pression de la boucle de circulation de fluide réfrigérant est un point important dans l'optimisation du Coefficient de Performance (COP) d'une boucle CO₂ de l'appareil de ventilation, de chauffage et/ou de climatisation. Actuellement, ce contrôle de la haute pression est effectué à l'aide d'un détendeur électronique.

Cependant, pour réaliser ce contrôle, il est nécessaire de mesurer la haute pression HP et la température du fluide réfrigérant à la sortie du refroidisseur de gaz. Pour estimer le débit de CO₂, une méthode consiste à mesurer la pression HP et la température CO₂ à l'entrée du détendeur.

Dans les dispositifs de l'art antérieur, les capteurs utilisés et la carte électronique de mesure sont séparés, engendrant une perte de place, une augmentation du coût de fabrication et une plus faible précision des mesures. En particulier, l'organe de détente présente deux capteurs (pression et température) fixés à son entrée et un capteur basse pression fixé à sa sortie, avec une carte électronique délocalisée.

Pour résoudre ce problème, l'invention propose de réaliser un détendeur autonome qui, non seulement assure le contrôle de la haute pression HP, mais permet aussi d'estimer le débit de CO₂ dans la boucle de fluide réfrigérant.

Plus précisément, l'invention a pour objet un organe de détente pour boucle de climatisation à fluide réfrigérant, en particulier d'un habitacle de véhicule automobile, dans lequel au moins un élément choisi parmi une sonde de température, un capteur de pression et une carte électronique est intégré audit organe de détente pour former un ensemble unitaire autonome.

Selon des modes de réalisation préféré de la présente invention :
- la sonde de température et le capteur de pression sont intégrés dans ledit détendeur ;
- la sonde de température et le capteur de pression sont disposés dans l'organe de détente pour mesurer des paramètres du côté haute pression dudit organe de détente ;
- la détente du fluide réfrigérant est fonction de la haute pression et d'un ressort ;
- la détente du fluide réfrigérant est déclenchée par un solénoïde ;
- la carte électronique est reliée électriquement au capteur de pression et à la sonde de température à l'intérieur dudit organe de détente ;
- la carte électronique est adaptée pour mesurer le débit massique du fluide réfrigérant ;
- le débit massique est déterminé à l'aide d'un microprocesseur muni d'un programme ayant pour paramètres l'information relative à ta haute pression et la température du fluide réfrigérant ;
- le programme présente les fonctions de récupération des mesures de la sonde de température et du capteur de pression, de communication avec l'extérieur pour récupérer des paramètres supplémentaires relatifs au fonctionnement de l'organe de détente, de contrôle de l'optimisation de la haute pression, et d'estimation du débit massique du fluide réfrigérant ;
- la carte électronique et/ou les capteurs de température et de pression est (sont) sur moulé(e)(s) dans ledit organe de détente ; et
- la carte électronique est munie d'un faisceau de communication avec l'extérieur dudit organe de détente ;
- la carte électronique présente une membrane de mesure de la pression et/ou de la température du fluide réfrigérant ;
- la membrane forme un unique capteur de pression et de température et présente une zone centrale sensible à la pression et une zone périphérique sensible à la température.

L'invention a aussi pour objet une boucle fermée de circulation de fluide réfrigérant, tel que du CO₂, pour un appareil de ventilation, de chauffage et/ou de climatisation comprenant au moins un compresseur, un évaporateur, un refroidisseur de gaz et un organe de détente tel que décrit précédemment.

L'invention se rapporte également à un appareil de ventilation, de chauffage et/ou de climatisation comprenant ladite boucle fermée de circulation de fluide réfrigérant.

D'autres caractéristiques, détails et avantages de l'invention ressortiront à la lecture de la description faite en référence aux dessins annexés donnés à titre d'exemple qui représentent respectivement :
- la figure 1, une vue de détail d'un organe de détente pour de boucle de climatisation à fluide réfrigérant,
- la figure 2, une variante de réalisation de la figure 1,
- la figure 3, une vue schématique d'un appareil de ventilation, de chauffage et/ou de climatisation comprenant une boucle fermée de circulation d'un fluide réfrigérant munie de l'organe de détente selon la présente invention,
- la figure 4, une vue de détail de l'organe de détente, et
- la figure 5 une variante de réalisation de la figure 4.

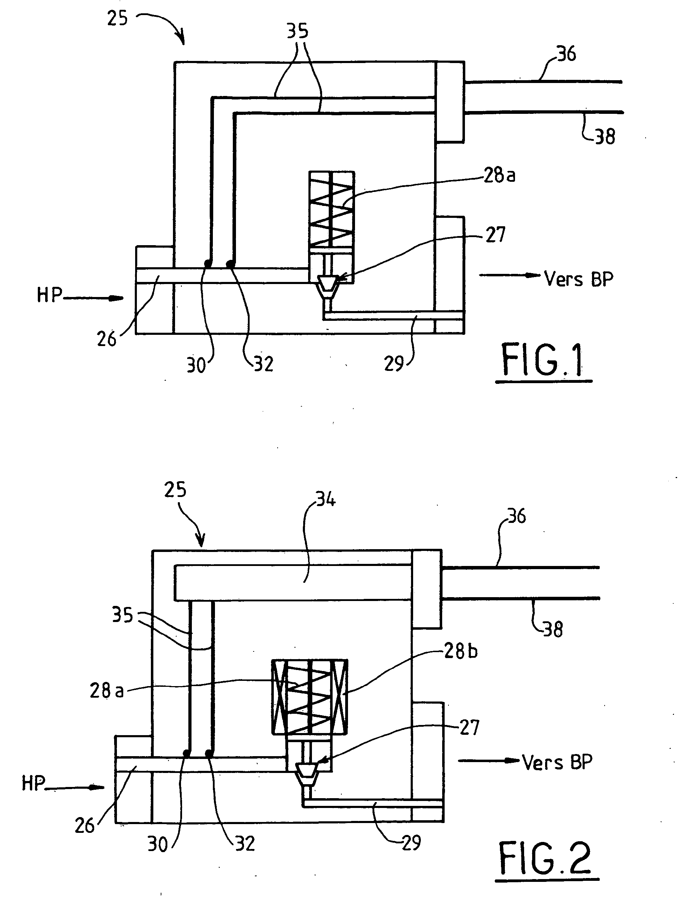

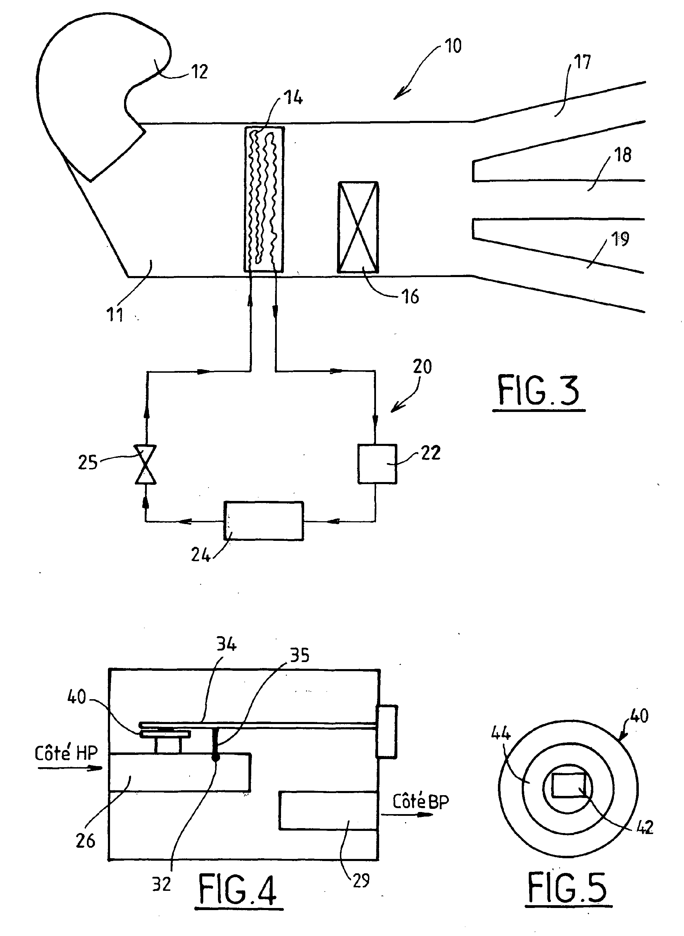

Comme cela est illustré par les figures 1 et 3, un appareil de ventilation, de chauffage et/ou de climatisation 10 pour habitacle de véhicule automobile est schématisé. Cet appareil de ventilation, de chauffage et/ou de climatisation 10 comprend un canal principal 11 de circulation d'air renfermant notamment un pulseur 12, un évaporateur sur l'air 14 pour rafraîchir le flux d'air et organe de chauffage tel qu'un radiateur électrique 16 pour réchauffer le flux d'air envoyé en direction de l'habitacle par diverses conduites secondaires 17, 18 et 19.

Une boucle fermée de fluide réfrigérant 20, tel que du CO₂, est reliée à de l'appareil de ventilation, de chauffage et/ou de climatisation 10, plus spécifiquement à l'évaporateur 14. Cette boucle 20 comprend ainsi au moins l'évaporateur 14, un compresseur 22, un condenseur 24, c'est-à-dire une refroidisseur de gaz, et détendeur 25, c'est-à-dire un organe de détente.

Comme cela est représenté plus en détail sur la figure 1, l'organe de détente 25 comprend un canal 26 d'arrivée de fluide réfrigérant haute pression (HP) provenant du refroidisseur de gaz 24, une vanne 27 pouvant s'ouvrir ou se fermer, et un canal 29 de sortie de fluide réfrigérant basse pression (BP) en direction de l'évaporateur 14. La vanne 27 est pilotée par un ressort 28a. Ainsi, la détente est assurée par un orifice variable qui s'ouvre ou se ferme en fonction de la haute pression car seule la haute pression exerce un effort sur le piston de la vanne 27. Le contre effort est assuré par le ressort 28a.

L'organe de détente 25 renferme également, de manière à former un ensemble unitaire autonome, une sonde 30 de température du fluide réfrigérant disposée côté haute pression,' un capteur 32 de pression du fluide réfrigérant placé également côté haute pression, c'est-à-dire en amont de l'électrovanne 27.

Selon une variante de réalisation illustrée par la figure 2, l'organe de détente 25 renferme également une carte électronique 34 de contrôle et commande de la vanne 27, de la sonde de température 30 et du capteur de pression 32, auxquels elle est reliée par différents faisceaux électriques 35. Dans ce mode de réalisation, le pilotage de la vanne 27 est assuré par un solénoïde de commande 28b pour former une électrovanne 27.

La carte électronique 34 contient un microprocesseur (non représenté) muni d'un logiciel de contrôle. La carte 34 est également reliée à une alimentation en énergie par l'intermédiaire d'un faisceau électrique 36 et communique avec l'extérieur, par exemple avec une unité de contrôle (non représentée) de la boucle de climatisation à fluide réfrigérant 20, pour envoyer les données recueillies ou recevoir des ordres par l'intermédiaire d'un bus de communication 38.

Le logiciel de contrôle présente les fonctions de récupération des mesures de la sonde de température 30 et du capteur de pression 32, de communication avec l'extérieur pour récupérer des paramètres supplémentaires relatifs au fonctionnement de l'organe de détente 24, de contrôle de l'optimisation de la haute pression, et d'estimation du débit massique du CO₂.

La carte électronique 34 de l'organe de détente 25 peut également supporter une unité de contrôle et permettre ainsi de calculer le débit massique du fluide réfrigérant. Cette donnée est alors transmise à un calculateur (non représenté) de l'appareil de ventilation, de chauffage et/ou de climatisation pour permettre une adaptation des paramètres de fonctionnement du moteur thermique par exemple en agissant sur le calculateur de l'injection.

Selon une variante de réalisation de la figure 4, la carte électronique 34 intègre sur une surface une membrane 40 faisant office de capteur de pression. Pour cela, la carte électronique 34 est placée au plus près du canal d'arrivée 26 de sorte que la membrane 40 affleure ledit canal, voire pénètre en partie dans celui-ci. Un gain de place conséquent est ainsi réalisé. Comme dans les modes de réalisation des figure 1 et 2, la sonde de température 32 est reliée à la carte électronique 34 et plonge dans le canal d'arrivée 26.

Sur la variante de réalisation de la figure 5, la membrane 40 a pour fonction à la fois de mesurer la pression dans la zone haute pression et également la température du fluide réfrigérant. Pour cela, la membrane 40 présente une zone centrale 42 sensible à la pression et une zone périphérique 44 sensible à la température.

Le concept de l'invention est ainsi de rendre autonome l'organe de détente pour lui permettre de fournir des renseignements physiques relatifs au fluide réfrigérant utilisés par exemple pour le calcul du débit massique dudit fluide.

La présente invention présente les avantages suivants :
- Autonomie d'un composant par intégration capteurs/sondes ;
- gain de place ;
- coût global d'installation réduit ;
- moins de câblages des capteurs ;
- pas ou peu de problème de fixation des capteurs ;
- moins de risques de fuites ;
- maintenance de la boucle de fluide réfrigérant facilitée ;
- pas nécessaire d'utiliser un capteur de mesure de la basse pression en sortie de l'organe de détente, en particulier lorsque le fluide réfrigérant est du CO₂ car la vitesse de circulation de ce fluide est proche de la vitesse ultrasonique et le débit massique du fluide ne dépend alors plus que de la pression en amont de l'électrovanne, c'est-à-dire du côté haute pression ;
- communication du détendeur avec l'extérieur, c'est-à-dire d'autres organes du véhicule.

Toutefois, il doit être bien entendu que ces exemples sont donnés uniquement à titre d'illustration de l'objet de l'Invention dont ils ne constituent en aucune manière une limitation.

Ainsi, le CO₂ peut être remplacé par un autre fluide réfrigérant tel qu'un HFC, par exemple le R134A, ou encore du R152A.

Le radiateur 16 peut être à eau et/ou électrique.

La boucle de climatisation à fluide réfrigérant 20 peut également comporter un accumulateur de frigories et/ou un échangeur interne.

## Revendications

1. Organe de détente (25) pour boucle (20) de climatisation à fluide réfrigérant, en particulier d'un habitacle de véhicule automobile, **caractérisé en ce qu'**au moins un élément choisi parmi une sonde de température (30), un capteur de pression (32) et une carte électronique (34) est intégré audit organe de détente (25) pour former un ensemble unitaire autonome.

2. Détendeur selon la revendication 1, dans lequel la sonde de température (30) et le capteur de pression (32) sont intégrés dans ledit détendeur (25).

3. Organe de détente selon la revendication 1 ou 2, dans lequel la sonde de température (30) et le capteur de pression (32) sont disposés dans l'organe de détente (25) pour mesurer des paramètres du côté haute pression dudit organe de détente (25).

4. Organe de détente selon la revendication 3, dans lequel la détente du fluide réfrigérant est fonction de la haute pression et d'un ressort (28a).

5. Organe de détente selon la revendication 3, dans lequel la détente du fluide réfrigérant est déclenchée par un solénoïde (28b).

6. Organe de détente selon l'une quelconques des revendications précédentes, dans lequel la carte électronique (34) est reliée électriquement au capteur de pression (32) et à la sonde de température (30) à l'intérieur dudit organe de détente (25).

7. Organe de détente selon l'une quelconques des revendications précédentes, dans lequel la carte électronique (34) est adaptée pour mesurer le débit massique du fluide réfrigérant.

8. Organe de détente selon la revendication 7, dans lequel le débit massique est déterminé à l'aide d'un microprocesseur muni d'un programme ayant pour paramètres l'information relative à la haute pression et la température du fluide réfrigérant.

9. Organe de détente selon la revendication 8, dans lequel le programme présente les fonctions de :
- récupération des mesures de la sonde de température et du capteur de pression,
- communication avec l'extérieur pour récupérer des paramètres supplémentaires relatifs au fonctionnement de l'organe de détente,
- contrôle de l'optimisation de la haute pression, et
- estimation du débit massique du fluide réfrigérant.

10. Organe de détente selon l'une quelconques des revendications précédentes, dans lequel la carte électronique (34) et/ou les capteurs de température (30) et de pression (32) est (sont) sur moulé(e)(s) dans ledit organe de détente (25).

11. Organe de détente selon la revendication 10, dans lequel la carte électronique présente une membrane (40) de mesure de la pression et/ou de la température du fluide réfrigérant.

12. organe de détente selon la revendication 11, dans lequel la membrane (40) forme un unique capteur de pression et de température et présente une zone centrale (42) sensible à la pression et une zone périphérique (44) sensible à la température.

13. Organe de détente selon l'une quelconques des revendications précédentes, dans lequel la carte électronique (34) est munie d'un faisceau (36) de communication avec l'extérieur dudit organe de détente (25).

14. Boucle fermée (20) de circulation de fluide réfrigérant pour un appareil (10) de ventilation, de chauffage et/ou de climatisation comprenant au moins un compresseur (22), un évaporateur (14), un refroidisseur de gaz (24) et un organe de détente (25) selon l'une quelconques des revendications précédentes.

15. Boucle fermée selon la revendication 14, dans lequel le fluide réfrigérant est du CO₂.

16. Appareil (10) de ventilation, de chauffage et/ou de climatisation comprenant une boucle fermée (20) de circulation de fluide réfrigérant selon la revendication 14 ou 15.
